Europäisches Patentamt

European Patent Office

Office européen des brevets

(19)

(11) Veröffentlichungsnummer: **0 001 032**
**B1**

(12) **EUROPÄISCHE PATENTSCHRIFT**

(21) Anmeldenummer: 78710002.3

(22) Anmeldetag: **01.06.78**

(51) Int. Cl.³: **H 01 S 3/03, H 01 S 3/097**

(54) **Gaslaser mit transversaler Anregung.**

(30) Priorität: 18.08.77 DE 2737226
30.11.77 DE 2753304
30.11.77 DE 2753327

(43) Veröffentlichungstag der Anmeldung:
07.03.79 Patentblatt 79/5

(45) Bekanntmachung des Hinweises auf die Patenterteilung:
25.02.81 Patentblatt 81/8

(84) Benannte Vertragsstaaten:
BE CH FR GB SE

(56) Entgegenhaltungen:
DE - A - 2 054 096
FR - A - 2 168 970
FR - A - 2 207 371
FR - A - 2 220 897
US - A - 3 772 610

APPLIED PHYSICS LETTERS, Vol. 22, Nr. 5, 1.
März 1973, New York, USA,
J. DAVIT et al.: "Performance of an unstable
repetitive pulsed $CO_2$ laser oscillator", Seiten
248—250

JOURNAL OF APPLIED MECHANICS AND
TECHNICAL PHYSICS, Vol. 15, Nr. 1, Januar-
Februar 1974, New York, US
P. I. BELOMESTNOV et al.: "Use of an extendes
gas glow discharge in an closed-cycle $CO_2$ laser
with convective cooling", Seiten 2-8

JOURNAL OF PHYSICS E: Scientific Instruments,
Vol. 10, März 1977, London, GB
P. PACE et al.: "A compact high-repetition rate
TEA $CO_2$ laser" Seiten 208—210

REVIEW OF SCIENTIFIC INSTRUMENTS, Vol. 47,
Nr. 6, Juni 1976, New York, US,
R. A. OLSEN et al.: "High-repetition rate closed-
cycle rare gas electrical discharge laser", Seiten
677—683

(73) Patentinhaber: ELTRO GmbH Gesellschaft für
Strahlungstechnik
Kurpfalzring 106 Postfach 10 21 20
D-6900 Heidelberg (DE)

(72) Erfinder: Karning, Heinrich
Albert-Fritz-Strasse 6
D-6900 Heidelberg (DE)
(72) Erfinder: Prein, Franz, Dipl.-Phys.
Hauptstrasse 18
D-6901 Waldhilsbach (DE)

(74) Vertreter: Muschka, Wilhelm
i.Fa. Eltro Gmbh Kurpfalzring 106 Postfach 10 21
20
D-6900 Heidelberg 1 (DE)

Courier Press, Leamington Spa, England.

## Gas-Laser mit transversaler Anregung

Die Erfindung betrifft einen Gaslaser mit transversaler Anregung bei Atmosphärendruck, bestehend aus einem Gehäuse, das ein von einem Gasfluß umströmtes Elektrodensystem enthält, dessen erste, der Hauptentladung dienende Elektrode mit einer nach außen führenden Hochspannungsleitung verbunden ist und das bei Laserbetrieb an seiner geschlossenen Stirnseite einen den Laserstrahl in Richtung der anderen Stirnseite total reflektierenden Spiegel aufweist, der über die mechanische Stabilität gewährleistende Distanzelemente mit einem im Bereich dieser zweiten Stirnseite befestigten teildurchlässigen Spiegel verbunden ist, und das bei Verstärkerbetrieb anstelle der Spiegel je ein die verstärkte Laserstrahlung durchlassendes Abschlußfenster besitzt, wobei sowohl die Spiegel als auch die Abschlußfenster in der Höhe des Freiraums zwischen den Elektroden angeordnet sind, bei dem der Gehäuseinnenraum mit Hilfe einer Wand, in der die zweite der Hauptentladung dienende Elektrode des Elektrodensystems integriert ist, in einen die Entladung aufnehmenden Resonatorraum sowie in einen Kühler-Lüfterraum unterteilt ist und bei dem diese beiden Räume über einen Gasführungskanal miteinander verbunden sind.

Aus der US-A-3 772 610 ist es über den Gattungsbegriff des Anspruchs 1 hinaus bekannt, daß der Gasführungskanal einen sich in Richtung auf den Resonatorraum verjüngenden Querschnitt hat. Aus der DE-A-2 054 096 ist es bekannt, bei einem Gaslaser in einem Gasführungskanal eine an seinen Querschnitt angepaßte Vorrichtung zur Gasreinigung und -regenerierung vorzusehen. Aus der FR-A-2 207 371 ist es bei einem Gaslaser bekannt, daß die die beiden Spiegel verbindenden Distanzelemente aus teilweise außerhalb des Gehäuses sowie parallel zur optischen Achse verlaufenden Stangen geringer Wärmeausdehnung bestehen.

Die Aufgabe der Erfindung wird in der Entwicklung eines Gaslasers gesehen, der trotz eines vergleichsweise einfachen Aufbaus einen guten Gesamtwirkungsgrad und einen geringen Gasverbrauch besitzt. Gemäß der Erfindung wird diese Aufgabe dadurch gelöst, daß die Wand als Masseschiene ausgebildet ist, die an den seitlichen Längswänden des Gehäuses anliegt, und daß der Gasführungskanal gehäuseaußenseitig verläuft.

Dieses geschlossene System bedingt einen sparsamen Gashaushalt. Durch die genau an der kritischen Stelle angeordnete Masseschiene erfolgt eine gezielte Wärmeabfuhr sowie die Erzeugung eines Gesamtwirkungsgrades von etwa 20%. Die den Innenraum etwa im Mittenbereich durchlaufende Masseschiene bewirkt außerdem eine beachtliche mechanische Stabilität.

Eine vorteilhafte Weiterbildung der Erfindung sieht vor, daß einmal die als Masseschiene ausgebildete zweite Elektrode parallel zur optischen Achse verläuft und in einer zu dieser Achse parallelen Ebene gebohrte oder eingegossene, geradlinig oder in Mäanderlinienform die Masseschiene durchlaufende Kühlkanäle aufweist und daß zum anderen die zweite Elektrode des Elektrodensystems an der dem Resonatorraum zugekehrten Seite der Masseschiene vorgesehen ist und ihr im Abstand der Höhe des Gasführungskanals als Gegenelektrode die erste Elektrode gegenüberliegt. Dadurch ergibt sich eine unmittelbare Kühlmöglichkeit des mit der Masseschiene verbundenen Elektrodenteils. Darüberhinaus wird eine induktivitätsärme Anpassung and den Hochspannungspulserzeuger möglich.

Hinsichtlich der konstruktiven Ausgestaltung ist es dabei von Vorteil, wenn das Gehäuse einen im wesentlichen rechteckförmigen Querschnitt besitzt und die einander gegenüberliegenden seitlichen Längswände im Bereich des Resonatorraums sowie im Bereich des Kühler-Lüfterraums jeweils eine über ihre ganze Länge verlaufende Ausnehmung aufweisen, in die der Gasführungskanal mündet. Der Resonatorraum ist hierbei beispielsweise so ausgelegt, daß die Mündung des Gasführungskanals in diesem Bereich zwischen den beiden Elektrodenteilen zu liegen kommt, so daß für die Gasführung keinerlei zusätzliche Leitelemente erforderlich sind. Was die geometrischen Abmessungen des Gasführungskanals anbetrifft, so besitzt dieser einen im wesentlichen C- oder U-förmig ausgebildeten Längsschnitt sowie über seine gesamte Länge einen entweder gleichmäßigen oder sich in Richtung auf den Resonatorraum verjüngenden Querschnitt. Letzterer trägt zu einer laminaren Schichtung des Gases in diesem Bereich bei.

Im Gasführungskanal befindet sich zweckmäßigerweise eine seinem Querschnitt angepaßte Vorrichtung zur Gasreinigung und -regenerierung, die vorzugsweise aus einem Molekularsieb, einem Gastrocknungsgefäß, einer Oxydationsstufe, einer Reduktionsstufe oder auch einer Kombination dieser Einzelaggregate besteht, wobei es ohne Belang ist, an welcher Stelle diese Vorrichtung den Querschnitt des Gasführungskanals durchspannt; ausgenommen den Resonatorraum, der dem Elektrodensystem vorbehalten ist, kann die Gasreinigungs- und -regenerierungsvorrichtung praktisch an jeder Stelle der ringförmigen Seitenkammern oder auch des Kühler-Lüfterraums vorgesehen werden.

Was die Anzahl und räumliche Anordnung der die beiden Spiegel verbindenden Distanzelemente anbetrifft, so ist es sinnvoll, wenn dieselben aus wenigstens drei außerhalb oder zum Teil außerhalb des Gehäuses sowie parallel zur optischen Achse verlaufenden Stangen geringer Wärmeausdehnung, wie z.B. Keramik oder Invarstahl, bestehen. In diesem Zusammenhang kann es ferner sinnvoll sein, wenn innerhalb des Gehäuses parallel zur Masseschiene und in Abstand zu ihr eine Trennwand eingezogen ist und der so entstandene Zwischenraum zwischen Trennwand und Masseschiene der Aufnahme der die beiden Spiegel verbindenden Distanzelementen dient. Letztere vermitteln dem gesamten Aufbau vergleichsweise große Stabilität und Robustheit.

Von großem Vorteil ist darüberhinaus die Servicefreundlichkeit der erfindungsgemäßen Konzeption, wenn die der Masseschiene beidseitig gegenüberliegenden Gehäuseseiten als Deckel ausgebildet und mittels O-Ringen und Schrauben abnehmbar mit dem übrigen Gehäuse verbunden sind und der den Resonatorraum verschließende Deckel in einfachster Weise mit zum Elektrodensystem führenden Hochspannungsdurchführungen versehen ist. Dadurch ergibt sich eine jederzeit leichte Eingriffsmöglichkeit sowohl in den Resonatorraum als auch in den Kühler-Lüfterraum.

Nach einer besonderen Ausführungsart der Erfindung besteht das Gehäuse aus Metall, Keramik oder Quarzgut und die Masseschiene aus thermisch und elektrisch leitendem Material, wie z.B. aus Cu oder Al.

Zugeständnisse an die symmetrische Konzeption sind in der Regel dann unumgänglich, wenn dem Gehäuse eine elektronische Zündvorrichtung integriert ist. Aus konstruktiven und elektrischen Gesichtspunkten bietet es sich hierbei an, daß die elektronische Zündvorrichtung in dem Zwischenraum des Gehäuses zwischen Resonatorraum und Kühler-Lüfterraum sowie hierzu parallel verlaufend angeordnet ist. So ergibt sich ein im wesentlichen nurmehr aus einer einzigen Baueinheit bestehendes Gerät. In elektrischer Hinsicht wird durch die benachbarte Anordnung des Resonatorraums und der Zündvorrichtung ein weitgehend symmetrischer Stromfluß und damit ein nur geringfügig wirksamer induktiver Widerstand erzielt.

Eine Weiterbildung der Erfindung sieht auch vor, daß der Resonatorraum und der Kühler-Lüfterraum als angliederbare Gehäuseeinheiten ausgebildet sind. Sofern aus irgendwelchen Gründen keine symmetrische Bauform bzw. Anordnung der einzelnen optischen, elektrischen und mechanischen Komponenten möglich ist, kann man auf diese Weise dennoch eine im wesentlichen nur von der Länge der Elektroden abhängige, vergleichsweise kurze Gerätekonzeption erhalten. Generell gesehen wird dadurch auch die Konfektionierung solcher Geräte vereinfacht, weil man durch die Elektrodenlänge und das Ausmaß der Abweichung von der symmetrischen Ausführungsform, die für die verschiedenen Erfordernisse jeweils günstigste Lösung besser in den Griff bekommt. Auch läßt sich der Resonatorraum mit wenigen Handgriffen ausbauen, so daß sowohl das Elektrodensystem als auch die übrigen im Gesamtgehäuse untergebrachten Bauelemente leicht zugänglich sind.

Zweckmäßig ist es ferner, wenn sich die elektronische Zündvorrichtung aus je einer der Vor- und der Hauptentladung dienenden Baugruppe zusammensetzt, die durch ein Zeitglied miteinander gekoppelt sind. Auch kann die Zündvorrichtung aus nur einer einzigen, beide Funktionen gleichzeitig erfüllenden Baugruppe bestehen. Dieselbe kann entweder aus einer mit Hilfe einer Ansteuerung betätigbaren Funkenstrecke oder aber beispielsweise aus einem mit Hilfe einer Ansteuerung und Versorgungseinheit betätigbaren Thyratron bestehen, die jeweils über einen Kondensator und gegebenenfalls zusätzlich einen Pulsübertrager mit dem Elektrodensystem verbunden sind, wobei der diese Zündvorrichtung enthaltende Zwischenraum des Gesamtgehäuses mit Isolierflüssigkeit oder Gas gefüllt ist. Die zusätzliche Versorgungseinheit bei Thyratron-Betrieb dient der Heizung des Thyratrons sowie der Erzeugung der Kathoden- oder Gittervorspannung — je nach Art des Thyratrons.

Von Vorteil ist es ferner, wenn der im Bereich des Freiraums zwischen den Elektroden an einer Stirnwand befestigte totalreflektierende Spiegel den Laserstrahl durch eine gegenüberliegende Ausnehmung in einer beispielsweise aus Isoliermaterial bestehenden Stirnwand des Resonatorraums hindurch auf einen an einer Stirnwand des Gehäuses befestigten teildurchlässigen und justierbaren Spiegel reflektiert. Aber auch der totalreflektierende Spiegel kann in der zur Stirnwand des Resonatorraums parallelen Außenwand des Gehäuses eingelassen sein, wobei dann die Stirnwand an der dem Spiegel gegenüberliegenden Stelle mit einer entsprechenden Ausnehmung versehen sein muß. In einer besonderen Ausführungsart der Erfindung kann die Anordnung als CO—, $CO_2$—, $N_2$— oder Eximer-Laser Verwendung finden.

Im folgenden werden an Hand einer Zeichnung Ausführungsbeispiele der Erfindung näher erläutert, wobei die in den einzelnen Figuren einander entsprechenden Teile dieselben Bezugszeichen aufweisen. Es zeigt

Fig. 1 einen Querschnitt durch ein Ausführungsbeispiel eines erfindungsgemäßen Gaslasers mit vier außerhalb des Gehäuses angeordneten Distanzelementen und einer den Gehäuseinnenraum unterteilenden Masseschiene.

Fig. 2 eine perspektivische Teilansicht des Lasers gemäß Fig. 1,

Fig. 3 einen Querschnitt durch einen Gaslaser gemäß Fig. 1, jedoch mit nur zwei außerhalb des Gehäuses angeordneten Distanzelementen sowie einem dritten, das zwischen der Masseschiene und einer weiteren, hierzu parallelen Wand angeordnet ist,

Fig. 4 einen Schnitt AA durch ein weiteres Ausführungsbeispiel eines erfindungsgemäßen Gaslasers gemäß Fig. 7,

Fig. 5 eine perspektivische Teilansicht des Lasers gemäß Fig. 4,

Fig. 6 den Längsschnitt durch einem ausgenommen den Resonatorraum unsymmetrisch ausgebildeten Laser und

Fig. 7 den Längsschnitt durch den Laser gemäß Fig. 4.

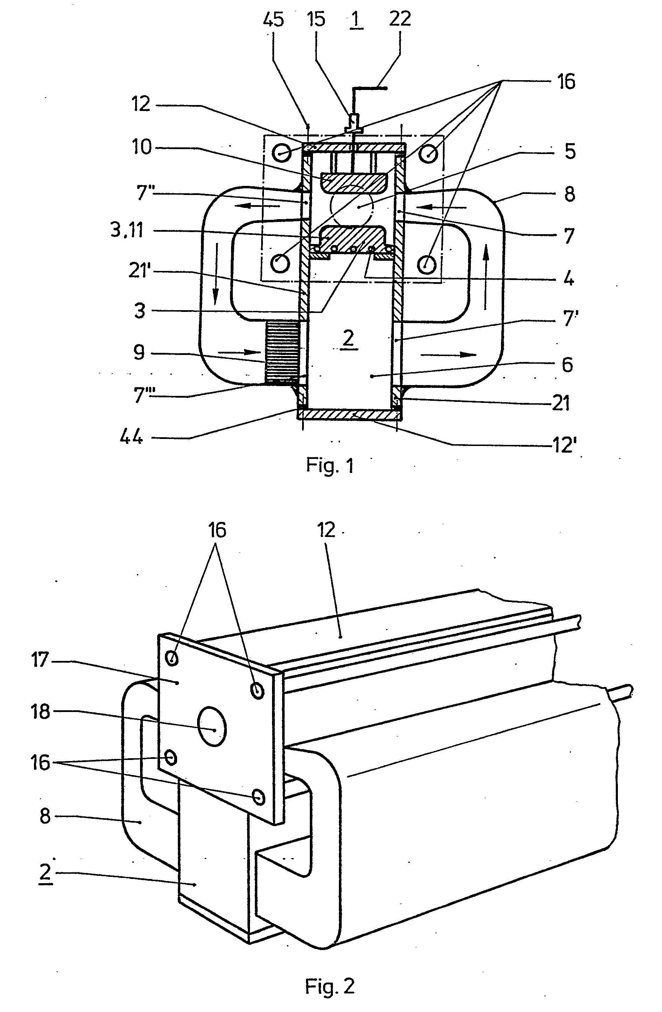

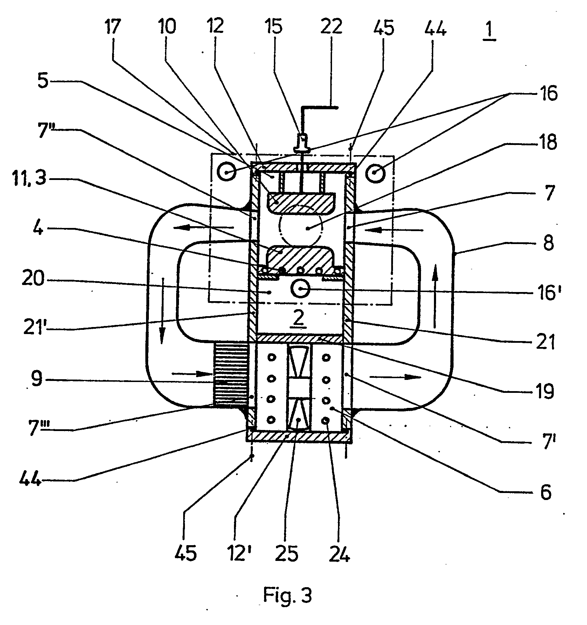

Fig. 1 zeigt einen Gaslaser 1, dessen z.B. aus Metall, Keramik oder Quarzgut bestehendes Gehäuse 2 einen rechteckförmigen Querschnitt besitzt und von einer z.B. aus Cu oder Al bestehenden Masseschiene 3 in zwei Hälften untergliedert wird, deren — jeweils in Blickrichtung gesehen — obere Hälfte 'den Resonatorraum 5 und deren untere Hälfte den Kühler-Lüfterraum 6 enthält. In letzterem ist wenigstens ein von Kühlrippen 24 umgebener Gasumwälzer 25 vorgesehen (Fig. 3).

Die Masseschiene 3 verläuft parallel zur optischen Achse und zur Längsachse des Gehäuses 2. Sie enthält kreiszylindrisch gebohrte oder miteingegossene Kühlkanäle 4, die sowohl untereinander als auch zur optischen Achse bzw. zur Gehäuselängsachse parallel verlaufen. Bei anderen Ausführungsbeispielen ist selbstverständlich auch ein anderer Querschnitt und Richtungsverlauf dieser Kanäle möglich. In vorliegendem Ausführungsbeispiel ist ihr Verlauf geradlinig; aber auch eine Schlangen- oder Mäanderlinienform oder dgl. ist denkbar. Die — wiederum in Blickrichtung gesehen — seitlichen Längswände 21 bzw. 21' der Gehäusehälften weisen jeweils eine über ihre ganze Länge verlaufende Ausnehmung 7 bis 7''' auf, von denen die Ausnehmungen 7 und 7' bzw. 7'' und 7''' gehäuseaußenseitig durch je einen C- oder U-förmig ausgebildeten Gasführungskanal 8 miteinander verbunden sind. Sein gleichmäßiger Querschnitt verjüngt sich lediglich im Bereich der Ausnehmung 7, kann bei einem anderen, zeichnerisch nicht dargestellten Ausführungsbeispiel aber auch durchgehend gleichmäßig ausgebildet sein. Eine mehr oder weniger leichte Zuspitzung des Gasführungskanals kann auch noch im Bereich der Ausnehmung 7'' vorgesehen sein. Dem Querschnitt des Gasführungskanals ist im Bereich der Ausnehmung 7''' eine Vorrichtung 9 zur Gasreinigung und -regenerierung angepaßt. Dieselbe kann ein Molekularsieb, ein Gastrocknungsgefäß, eine Oxydationsstufe oder eine Reduktionsstufe sein, wobei auch Kombinationen dieser Aggregate vorstellbar sind. Bei anderen zeichnerisch nicht dargestellten Ausführungsbeispielen kann die Gasreinigungs- und -regenerierungsvorrichtung auch an einer beliebigen anderen Stelle des Gasführungskanals 8, z.B. in einer der Ausnehmungen 7 bis 7'', liegen. Sie reinigt das durch den Kühler-Lüfterraum oder auch durch einen gewissen Elektrodenabtrag verschmutzte Gas.

Im Resonatorraum 5 ist das Elektrodensystem 10, 11 untergebracht, wobei das der Entladung dienende Teil 11 in der Masseschiene 3 integriert ist (Fig. 1, 3 und 4), während die Elektrode 10 dem Teil 11 etwa im Abstand der Höhe des Gasführungskanals 8 gegenüberliegt. Dieser Elektrodenabstand wurde gewählt, weil der Raum zwischen den Elektroden 10 und 11 sozusagen die Fortsetzung des seitlich hiervon in die Längswände 21 bzw. 21' einmündenden Gasführungskanals 8 ist, aus dem das Lasergas, z.B. $CO_2$— oder Stickstoffgas, in der Regel mit großer Geschwindigkeit und einem Druck in der Größenordnung von einer Atmosphäre in den Elektrodenbereich gelangt, um dort von den Elektroden 10 und 11 angeregt zu werden. Diese Elektrodenanordnung kann — wie dargelegt — aus zwei Elektroden oder aber auch aus zwei Elektroden und einer oder mehreren Hilfselektroden bestehen, wie dies etwa in der DE—PS 24 11 309 oder auch der DE—OS 25 23 153 beschrieben ist. Um das Gas für die Hauptentladung leitend zu machen, kommt es zwischen den Hilfselektroden oder auch einer Hauptelektrode zu einer Vorionisation bzw. Vorentladung und anschließend zwischen den Elektroden 10 und 11 zu der Hauptentladung. Hierbei kann der Zeitraum zwischen Vor- und Hauptentladung im Hinblick auf eine maximale Ausgangsenergie des Lasers elektronisch variiert und optimiert werden. Es muß aber — um ein Zusammenbrechen der Spannung zu vermeiden — bei nur zwei Elektroden schneller geschaltet werden als wenn auch noch Hilfselektroden mitverwendet werden.

Die der Masseschiene 3 beidseitig gegenüberliegenden Gehäuseseiten sind als Deckel 12 und 12' ausgebildet und mittels O-Ringen 44 und Schrauben 45 abnehmbar mit dem übrigen Gehäuse verbunden. Durch den Deckel 12 ist mit Hilfe eines Isolators 15 die Hochspannungsleitung 22 an die Elektrode 11 geführt.

Mit 16 sind vier stangenförmige Distanzelemente bezeichnet, deren Anordnung und Funktion vor allem aus Fig. 2 hervorgeht. Sie verlaufen parallel zur optischen Achse beiderseits der Einmündung des Gasführungskanals 8 in den Resonator- bzw. Entladungsraum 5. Ihre Enden sind jeweils über eine Platte 17 miteinander verbunden, wobei in Fig. 2 aus Gründen der Übersicht nur das eine Ende gezeichnet ist. An beiden Platten ist über justierbare Halterungen je ein Spiegel 18 befestigt. Einer dieser Spiegel kann dabei auch starr angeordnet sein, sofern seine Lage exakt senkrecht zur optischen Achse ausgerichtet ist. Ihre Lage in Bezug auf die Elektroden 10, 11 geht aus Fig. 3 hervor, wo die Spiegel im Bereich des Freiraums zwischen diesen Elektroden strichpunktiert angedeutet sind. Der am strahlenaustrittseitigen Ende montierte Spiegel ist teildurchlässig, während der andere, ihm gegenüberliegende Spiegel totalreflektierend ausgebildet ist.

Das Ausführungsbeispiel gemäß Fig. 3 unterscheidet sich von dem vorstehend beschriebenen im wesentlichen nur durch die Anzahl und Anordnung der Distanzelemente. Die Spiegel 18 bzw. die sie tragenden Platten 17 sind nur an drei Distanzelementen, also der geringstmöglichen Zahl von Punkten, die für die Definition einer Fläche erforderlich ist, befestigt. Unterhalb der Masseschiene und parallel zu ihr ist die Trennwand 19 eingezogen. Der so entstandene Raum 20 zwischen Wand und Masseschiene dient der Aufnahme des Distanzelementes 16', das bei dieser Variante innerhalb des Gehäuses 2 liegt. Die beiden anderen Distanzelemente 16 dagegen verlaufen gehäuseaußenseitig unmittelbar neben dem Deckel 12.

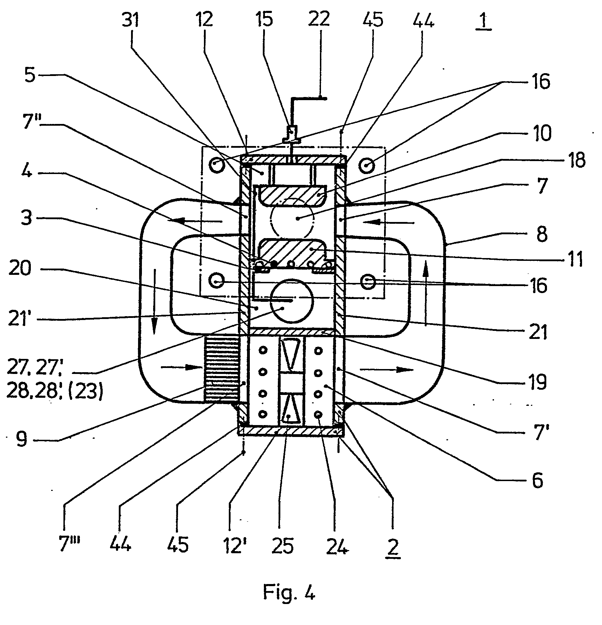

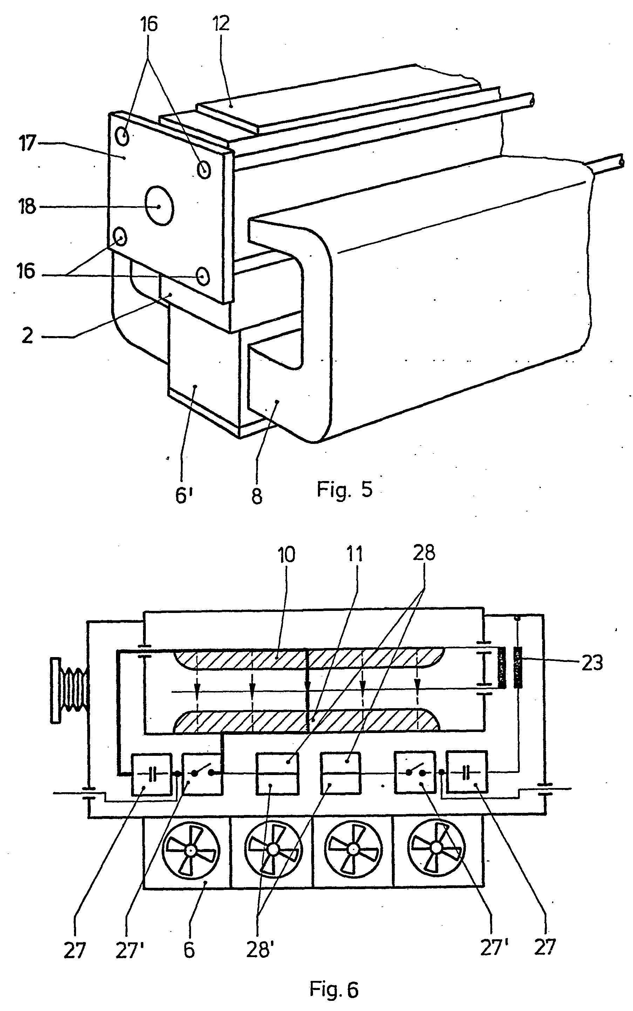

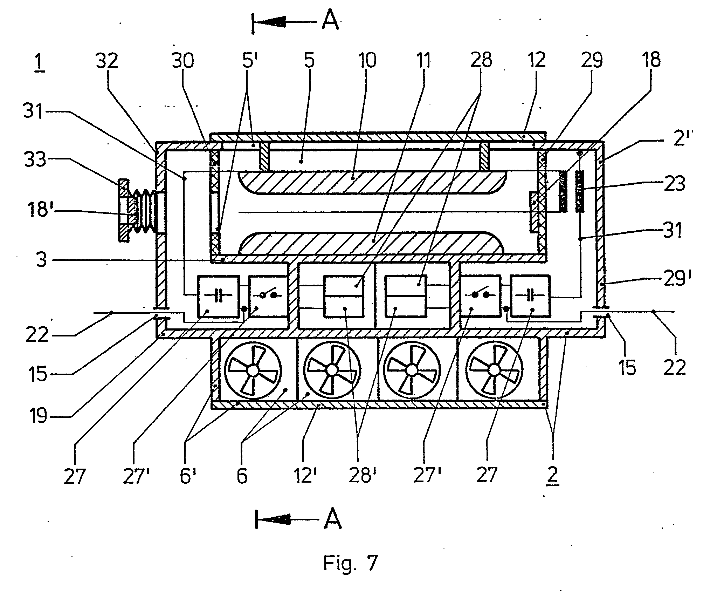

Der Gaslaser 1 gemäß den Fig. 4 bis 7 entspricht im wesentlichen demjenigen der Fig. 1 bis 3, d.h. er besteht aus einem Gehäuse 2 aus Metall, das von einer parallel zur optischen Achse verlaufenden Masseschiene 3 in einen Resonatorraum 5 und in einen mit Kühlrippen 24 und Gasumwälzer 25 versehenen Kühler-Lüfterraum 6 untergliedert wird. Die seitlichen Längswände 21 und 21' des Gehäuses 2 weisen zwei Paar einander gegenüberliegende Ausnehmungen 7 bis 7''' auf, die jeweils durch einen gehäuseaußenseitig verlaufenden Gasführungskanal 8 miteinander verbunden sind. Mit 9 ist auch hier eine dem Gasführungskanal an einer beliebigen Stelle seines Querschnitts angepaßte Vorrichtung zur Gasreinigung bezeichnet. Die Pfeile innerhalb des Kanals symbolisieren die Strömungsrichtung des Gases. Die Masseschiene 3 ist mit Kühlkanälen 4 versehen. Die ihr gegenüberliegenden Deckel 12 und 12' sind über O-Ringe 44 und Schrauben 45 mit dem übrigen Gehäuse und die stangenförmigen Distanzelemente 16 über je eine an ihren Enden befestigte Platte 17 (Fig. 5) miteinander verbunden. Diese Distanzelemente können aber bei sehr kurzen und kompakt ausgebildeten Ausführungsbeispielen auch entfallen. Bei dem Ausführungsbeispiel gemäß den Fig. 6 und 7 kann sich das Gehäuse 2 auch aus drei teils aneinander befestigten, teils ineinander verschachtelten, immer jedoch zueinander parallel verlaufenden Gehäuseeinheiten 2', 5' und 6' zusammensetzen, von denen die Gehäuseeinheiten 2' und 5' einen gemeinsamen äußeren Deckel 12 besitzen.

Alle diese Varianten der Fig. 4 bis 7 können so ausgelegt sein, daß sich — in Blickrichtung unterhalb des Resonatorraums 5 — ein freier Raum ergibt. Derselbe kommt dadurch zustande, daß unterhalb der Masseschiene 3 und parallel zu ihr eine Trennwand 19 eingezogen wird. Als wesentlicher Unterschied zu dem in den Fig. 1 bis 3 beschriebenen Konzept kann der auf diese Weise entstandene Freiraum 20 (Fig. 4) dazu genutzt werden, daß auch die elektronische Zündvorrichtung 27 bis 28' geräteintern, und zwar vorzugsweise parallel zur optischen Achse, vorgesehen wird. Die Zündvorrichtung kann dabei entweder eine Funkenstrecke oder ein Thyratron — für beide Mögichkeiten steht die Bezugszahl 27' — enthalten, wobei die Funkenstrecke lediglich über die Ansteuerung 28 — während das Thyratron über die Ansteuerung 28 und die Versorgungseinheit 28' — betätigt wird. Funkenstrecke und Thyratron sind jeweils über den Kondensator 27 mit dem Elektrodensystem 10, 11 verbunden. Von den in den Fig. 6 und 7 dargestellten beiden Baugruppen 27 bis 28' dient die in Blickrichtung rechte der Vorionisation; hier führt die elektrische Verbindung vom Kondensator 27 zur Elektrode 10 über den Pulsübertrager 23. Die in Blickrichtung linke Baugruppe 27 bis 28' dagegen dient der Hauptionisation. Bei einem anderen, zeichnerisch nicht dargestellten Ausführungsbeispiel ist es auch denkbar, ohne eine Vorionisation auszukommen. In diesem Fall besteht die Zündvorrichtung dann nur aus einer einzigen Baugruppe 27 bis 28'. Die zwischen die Funkenstrecke bzw. das Thyratron 27' und den Kondensator 27 angelegte, Hochspannung führende Aufladeleitung 22 wird mit Hilfe je eines in den Wänden 32 bzw. 29' der Gehäuseeinheit 2' vorgesehenen Isolators 15 in das Gehäuseinnere geführt. Mit der Bezugszahl 31 ist sodann noch die von der Zündvorrichtung zum Elektrodensystem führende Pulsleitung bezeichnet.

Die den Resonatorraum 5 enthaltende Gehäuseeinheit 5' ist an ihren beiden Stirnseiten von zwei zueinander parallelen und in zur Längsachse senkrechten Ebenen verlaufenden Stirnwänden 29 und 30 aus Isoliermaterial, wie z.B. aus Keramik oder Quarzgut, begrenzt. Die Stirnwand 29 trägt innenseitig, im Bereich des Elektrodenzwischenraums, den Spiegel 18, der den Laserstrahl total nach der gegenüberliegenden Stirnwand 30 reflektiert. Da letztere in diesem Bereich eine Ausnehmung aufweist, fällt der Strahl durch diese Ausnehmung hindurch auf einen entweder in der Stirnwand 32 eingelassenen oder auch außerhalb dieser Stirnwand befestigten, teildurchlässigen Spiegel 18'. Die Verbindung zwischen Spiegel und Gehäuse muß hierbei gasdicht ausgeführt sein. Dieser Spiegel ist über einen aus den Fig. 6 und 7 ersichtlichen Faltenbalg mittels der Vorrichtung 33 justierbar. Bei einem anderen, zeichnerisch nicht dargestellten Ausführungsbeispiel sind auch andere Justiermöglichkeiten, z.B. über Kugelflächen und dgl., denkbar. Der totalreflektierende Spiegel 18 kann ferner auch an der Innenseite der Außenwand 29' des Gehäuses befestigt oder in derselben eingelassen sein. In letzterem Falle muß die zu der Außenwand 29' parallele Stirnwand 29 des Resonatorraums 5 an der dem Spiegel gegenüberliegenden Stelle — d.h. dort, wo der Spiegel 18 in Fig. 7 gezeichnet ist — mit einer entsprechenden Ausnehmung versehen sein. In Fig. 6 ist darüberhinaus noch aufgezeigt, daß die unsymmetrische Bauform bzw. Anordnung der Gehäuseeinheiten 2' und 6' (Fig. 7) eine lediglich geringfügige Unsymmetrie hinsichtlich des Stromflusses mit sich bringt.

Insgesamt gesehen handelt es sich hierbei um einen herstellungstechnisch leicht zu realisierenden, wenig störanfälligen und hinsichtlich seines Wirkungsgrades ausgesprochen günstigen Gaslaser, der als Sender und als Verstärker Verwendung finden kann. Bei der Verwendung als Verstärker müssen lediglich die als "teildurchlässig" bezeichneten Spiegel 18 durch Abschlußfenster ersetzt werden, die die verstärkte Laserstrahlung hindurchlassen.

**Patentansprüche**

1. Gaslaser mit transversaler Anregung bei Atmosphärendruck, bestehend aus einem Gehäuse (12, 12', 21, 21'), das ein von einem Gasfluß umströmtes Elektrodensystem (10, 11) enthält, dessen erste, der Hauptentladung dienende Elektrode (10) mit einer nach außen führenden Hochspannungsleitung (22) verbunden ist und das bei Laserbetrieb an seiner geschlossenen Stirnseite einen den Laserstrahl in Richtung der anderen Stirnseite total reflektierenden Spiegel (18) aufweist, der über die mechanische Stabilität gewährleistende Distanzelemente (16) mit einem im Bereich dieser zweiten Stirnseite befestigten teildurchlässigen Spiegel (18) verbunden ist, und das bei Verstärkerbetrieb anstelle der Spiegel (18) je ein die verstärkte Laserstrahlung durchlassendes Abschlußfenster besitzt, wobei sowohl die Spiegel (18) als auch die Abschlußfenster in der Höhe des Freiraums zwischen den Elektroden (10, 11) angeordnet sind, bei dem der Gehäuseinnenraum mit Hilfe einer Wand (3), in der die zweite der Hauptentladung dienende Elektrode (11) des Elektrodensystems (10, 11) integriert ist, in einen die Entladung aufnehmenden Resonatorraum (5) sowie in einen Kühler-Lüfterraum (6) unterteilt ist und bei dem diese beiden Räume (5, 6) über einen Gasführungskanal (8) miteinander verbunden sind, dadurch gekennzeichnet, daß die Wand als Masseschiene (3) ausgebildet ist, die an den seitlichen Längswänden (21, 21') des Gehäuses anliegt, und daß der Gasführungskanal (8) gehäuseaußenseitig verläuft.

2. Gaslaser nach Anspruch 1, dadurch gekennzeichnet, daß die als Masseschiene (3) ausgebildete zweite Elektrode (11) parallel zur optischen Achse verläuft und in einer zu dieser Achse parallelen Ebene gebohrte oder eingegossene, geradlinig oder in Mäanderlinienform die Masseschiene (3) durchlaufende Kühlkanäle (4) aufweist.

3. Gaslaser nach Anspruch 1 oder 2, dadurch gekennzeichnet, daß die zweite Elektrode (11) des Elektrodensystems (10, 11) an der dem Resonatorraum (5) zugekehrten Seite der Masseschiene (3) vorgesehen ist und ihr im Abstand der Höhe des Gasführungskanals (8) als Gegenelektrode die erste Elektrode (10) gegenüberliegt.

4. Gaslaser nach einem der Ansprüche 1 bis 3, dadurch gekennzeichnet, daß das Gehäuse (2) einen im wesentlichen rechteckförmigen Querschnitt besitzt und die einander gegenüberliegenden seitlichen Längswände (21; 21') im Bereich des Resonatorraums (5) sowie im Bereich des Kühler-Lüfterraums (6) jeweils eine über ihre ganze Länge verlaufende Ausnehmung (7 bis 7''') aufweisen, in die der Gasführungskanal (8) mündet.

5. Gaslaser nach einem der Ansprüche 1 bis 4, dadurch gekennzeichnet, daß der Gasführungskanal (8) einen im wesentlichen C- oder U-förmig ausgebildeten Längsschnitt sowie über seine gesamte Länge einen entweder gleichmäßigen oder sich in Richtung auf die Ausnehmung (7) verjüngenden Querschnitt besitzt (Fig. 1, 3, 4).

6. Gaslaser nach einem der Ansprüche 1 bis 5, dadurch gekennzeichnet, daß im Gasführungskanal (8) eine seinem Querschnitt angepaßte Vorrichtung (9) zur Gasreinigung und -regenerierung vorgesehen ist, die vorzugsweise aus einem Molekularsieb, einem Gastrocknungsgefäß, einer Oxydationsstufe, einer Reduktionsstufe oder auch einer Kombination dieser Einzelaggregate besteht (Fig. 1, 3, 4).

7. Gaslaser nach einem der Ansprüche 1 bis 6, dadurch gekennzeichnet, daß die die beiden Spiegel (18) verbindenden Distanzelemente (16) aus wenigstens drei außerhalb oder zum Teil außerhalb des Gehäuses (2) sowie parallel zur optischen Achse verlaufenden Stangen geringer Wärmeausdehnung, wie z.B. Keramik oder Invarstahl, bestehen (Fig. 1, 2, 3, 4, 5).

8. Gaslaser nach einem der Ansprüche 1 bis 7, dadurch gekennzeichnet, daß innerhalb des Gehäuses (2) parallel zur Masseschiene (3) und in Abstand zu ihr eine Trennwand (19) eingezogen ist und der so entstandene Zwischenraum zwischen Trennwand und Masseschiene der Aufnahme der die beiden Spiegel (18) verbindenden Distanzelementen (16') dient (Fig. 3).

9. Gaslaser nach einem der Ansprüche 1 bis 8, dadurch gekennzeichnet, daß die der Masseschiene (3) beidseitig gegenüberliegenden Gehäuseseiten als Deckel (12; 12') ausgebildet und mittels O-Ringen (44) und Schrauben (45) abnehmbar mit dem übrigen Gehäuse (2) verbunden sind und der den Resonator- bzw. Entladungsraum (5) verschließende Deckel (12) mit Hochspannungsdurchführungen (15) zum Elektrodensystem (10, 11) versehen ist (Fig. 1, 3, 4).

10. Gaslaser nach einem der Ansprüche 1 bis 9, dadurch gekennzeichnet, daß das Gehäuse (2) aus Metall, Keramik oder Quarzgut und die Masseschiene (3) aus thermisch und elektrisch leitendem Material, wie z.B. Cu oder Al, besteht.

11. Gaslaser nach Anspruch 1 oder 8, dadurch gekennzeichnet, daß dem Gehäuse (2) eine elektronische Zündvorrichtung (27 bis 28') integriert ist (Fig. 4, 6, 7).

12. Gaslaser nach Anspruch 11, dadurch gekennzeichnet, daß die elektronische Zündvorrichtung (27 bis 28') in dem Zwischenraum des Gehäuses zwischen Resonator- bzw. Entladungsraum (5) und Kühler-Lüfterraum (6) sowie hierzu parallel verlaufend angeordnet ist (Fig. 4, 6, 7).

13. Gaslaser nach Anspruch 11 und 12, dadurch gekennzeichnet, daß der Resonatorraum (5) und der Kühler-Lüfterraum (6) als angliederbare Gehäuseeinheiten (5'; 6') ausgebildet sind (Fig. 7).

14. Gaslaser nach Anspruch 11 oder 12, dadurch gekennzeichnet, daß sich die elektronische Zündvorrichtung (27 bis 28') aus einer einzigen oder aus je einer der Vor- und der Hauptentladung dienenden, durch ein Zeitglied miteinander gekoppelten Baugruppe zusammensetzt.

15. Gaslaser nach Anspruch 14, dadurch gekennzeichnet, daß jede Baugruppe der Zündvorrichtung (27 bis 28') aus einem mit Hilfe einer Ansteuerung (28) und gegebenenfalls einer Versorgungseinheit (28') betätigbaren Funkenstrecke (27') besteht, die über einen Kondensator (27) und gegebenenfalls zusätzlich einen Pulsübertrager (23) mit dem Elektrodensystem (10, 11) verbunden ist (Fig. 6, 7).

16. Gaslaser nach einem der Ansprüche 11 bis 15, dadurch gekennzeichnet, daß der die Zündvorrichtung (27 bis 28') enthaltende Zwischenraum des Gehäuses (2') mit Isolierflüssigkeit oder Gas gefüllt ist.

17. Gaslaser nach einem der Ansprüche 1 bis 16, dadurch gekennzeichnet, daß der im Bereich des Freiraums zwischen den Elektroden (10; 11) an einer Stirnwand (29) befestigte totalreflektierende Spiegel (18) den Laserstrahl durch eine gegenüberliegende Ausnehmung in einer Stirnwand (30) des Resonatorraums hindurch auf einen an einer Stirnwand (32) des Gehäuses (2) befestigten teildurchlässigen und justierbaren Spiegel (18') reflektiert (Fig. 7).

18. Gaslaser nach Anspruch 17, dadurch gekennzeichnet, daß der totalreflektierende Spiegel (18) in der zur Stirnwand (29) des Resonatorraums (5) parallelen Außenwand (29') des Gehäuses (2) eingelassen und die Stirnwand (29) mit einer dem Spiegel gegenüberliegenden Ausnehmung versehen ist (Fig. 7).

19. Gaslaser nach einem der vorausgehenden Ansprüche, gekennzeichnet durch die Verwendung als CO—, $CO_2$—, $N_2$— oder Eximer-Laser.

**Revendications**

1. Laser à gaz à excitation transversale à la pression atmosphérique, composé d'un boîtier (12, 12', 21, 21') renfermant un système d'électrodes (10, 11) baigne par un courant gazeux, et dont la première électrode (10) servant à la décharge principale est connectée à un conducteur à haute tension (22) menant à l'extérieur, qui, dans le fonctionnement en laser, comporte, sur sa face frontale fermée, un miroir (18) réfléchissant totalement le faisceau laser en direction de l'autre face frontale, ledit miroir étant relié par des éléments d'écartement (16) assurant la stabilité mécanique à un miroir (18) partiellement transparent fixé dans la zone de cette seconde face frontale, et qui, dans le fonctionnement en amplificateur, comporte, au lieu de chacun des miroirs (18), une fenêtre d'obturation laissant passer le rayonnement laser amplifié, les miroirs (18) de même que les fenêtres d'obturation étant disposés à hauteur de l'espace libre séparant les électrodes (10, 11), l'enceinte interne du boîtier étant divisée, par une paroi (3) dans laquelle est intégrée la seconde électrode (11) du système d'électrodes (10, 11) servant à la décharge principale, en une cavité résonnante (5) recevant la décharge et en une enceinte de ventilation et de réfrigération (6), ces deux enceintes (5, 6) étant jointes ensemble par un canal de guidage de gaz (8), caractérisé en ce que la paroi est conformée en barre massée (3) s'appliquant aux parois longitudinales latérales (21, 21') du boîtier, et en ce que le canal de guidage de gaz (8) s'étend à l'extérieur du boîtier.

2. Laser à gaz selon la Revendication 1, caractérisé en ce que la seconde électrode (11) conformée en barre massée (3) est orientée parallèlement à l'axe optique et comporte, dans un plan parallèle à cet axe, des canaux de réfrigération (4), percés ou venus de moulage, parcourant la barre massée (3) en lignes droites ou sinueuses.

3. Laser à gaz selon une quelconque des Revendications 1 ou 2, caractérisé en ce que la seconde électrode (11) du système d'électrodes (10, 11) est disposée sur le côté de la barre massée (3) tourné vers la cavité résonnante (5), et que la première électrode (10) lui est opposée, comme contre-électrode, à distance de la hauteur du canal de guidage de gaz (8).

4. Laser à gaz selon une quelconque des Revendications 1 à 3, caractérisé en ce que le boîtier (2) présente une section transversale essentiellement rectangulaire et que chacune des parois longitudinales latérales (21, 21') se faisant face comporte, dans la zone de la cavité résonnante (5) comme dans celle de l'enceinte de ventilation et de réfrigération (6), un évidement (7 à 7''') s'étendant sur toute la hauteur de la paroi et dans lequel débouche le canal de guidage de gaz (8).

5. Laser à gaz selon une quelconque des Revendications 1 à 4, caractérisé en ce que le canal de guidage de gaz (8) présente une section longitudinale essentiellement en forme de C ou de U et, sur toute sa hauteur, une section transversale soit constante soit allant en s'amincissant en direction de l'évidement (7) (Figures 1, 3, 4).

6. Laser à gaz selon une quelconque des Revendications 1 à 5, caractérisé en ce qu'il est prévu, dans le canal de guidage de gaz (8), un dispositif (9) approprié à la section transversale dudit canal pour l'épuration et la régénération du gaz, ledit dispositif étant constitué de préférence par un filtre moléculaire, un récipient de dessication du gaz, un étage d'oxydation, un étage de réduction, ou une combinaison de ces éléments unitaires (Figures 1, 3, 4).

7. Laser à gaz selon une quelconque des Revendications 1 à 6, caractérisé en ce que les éléments d'écartement (16) reliant les deux miroirs (18) se composent d'au moins trois tiges de faible coefficient de dilatation thermique, par exemple en matière céramique ou en acier invar, s'étendant, parallèlement à l'axe optique, en dehors ou partiellement en dehors du boîtier (2) (Figures 1, 2, 3, 4, 5).

8. Laser à gaz selon une quelconque des Revendications 1 à 7, caractérisé en ce qu'une cloison (19) est insérée à l'intérieur du boîtier (2) parallèlement à la barre massée (3) et à distance d'elle, et que l'espace intermédiaire ainsi formé entre la cloison et la barre massique sert à recevoir les éléments d'écartement (16') reliant les deux miroirs (18) (Figure 3).

9. Laser à gaz selon une quelconque des Revendications 1 à 8, caractérisé en ce que les côtés du boîtier placés de part et d'autre de la barre massée (3) sont conformées en couvercles (12, 12') et sont joints de façon amovible au autres parties du boîtier (2) par des bagues toroïdales (44) ou des vis (45), et en ce que le couvercle (12) fermant la cavité résonnante ou de décharge (5) comporte des traversées de haute tension (15) allant au système d'électrodes (10, 11) (Figures 1, 3, 4).

10. Laser à gaz selon une quelconque des Revendications 1 à 9, caractérisé en ce que le boîtier (2) est en métal, en matière céramique ou en quartz, et la barre massée (3) en matière thermo- et électro-conductrice telle que le cuivre ou l'aluminium.

11. Laser à gaz selon la Revendication 1 ou la Revendication 8, caractérisé en ce qu'un dispositif électronique d'amorçage (27 à 28') est intégré au boîtier (2) (Figures 4, 6, 7).

12. Laser à gaz selon la Revendication 11, caractérisé en ce que le dispositif électronique d'amorçage (27 à 28') est disposé dans l'espace intermédiaire du boîtier entre la cavité résonnante ou de décharge (5) et l'enceinte de ventilation et de réfrigération (6) et parallèle à elles (Figures 4, 6, 7).

13. Laser à gaz selon les Revendications 11 et 12, caractérisé en ce que la cavité résonnante (5) et l'enceinte de ventilation et de réfrigération (6) sont constituées par des éléments de boîtier pouvant s'intéger les uns aux autres (5', 6') (Figure 7).

14. Laser à gaz selon la Revendication 11 ou la Revendication 12, caractérisé en ce que le dispositif électronique d'amorçage (27 à 28') est constitué, soit par un module unique, soit par un module servant à la décharge préliminaire et un module servant à la décharge principale couplés ensemble par un élément temporisateur.

15. Laser à gaz selon la Revendication 14, caractérisé en ce que chaque module du dispositif d'amorçage (27 à 28') est constitué par un éclateur (27') actionnable au moyen d'un dispositif déclencheur (28) et éventuellement d'une unité distributrice (28'), et joint au système d'électrodes (10, 11) par l'intermédiaire d'un condensateur (27) et éventuellement en outre par un transmetteur d'impulsions (23) (Figures 6, 7).

16. Laser à gaz selon une quelconque des Revendications 11 à 15, caractérisé en ce que l'espace intermédiaire du boîtier (2') contenant le dispositif d'amorçage (27 à 28') est rempli d'un fluide isolant ou d'un gaz.

17. Laser à gaz selon une quelconque des Revendications 1 à 16, caractérisé en ce que le miroir totalement réfléchissant (18) fixé à une paroi frontale (29) dans la zone de l'espace libre intermédiaire aux électrodes (10, 11), réfléchit le faisceau laser, à travers un évidement lui faisant face dans une paroi frontale (30) de la cavité résonnante, sur un miroir partiellement transparent et ajustable (18') fixé à une paroi frontale (32) du boîtier (2) (Figure 7).

18. Laser à gaz selon la Revendication 17, caractérisé en ce que le miroir totalement réfléchissant (18) est inséré dans la paroi extérieure (29') du boîtier (2) parallèle à la paroi frontale (29) de la cavité résonnante (5), et que la paroi frontale (29) est pourvue d'un évidement faisant face au miroir (Figure 7).

19. Laser à gaz selon une quelconque des Revendications 1 à 18, caractérisé en ce qu'il est utilisé comme laser à CO, à $CO_2$, à $N_2$ ou eximer.

## Claims

1. Gas laser with transverse excitation at atmospheric pressure, comprising a housing (12, 12', 21, 21') containing an electrode system (10, 11) in a gas stream, the first electrode (10) of the system, which electrode (10) serves for the main discharge, being connected to a high voltage lead (22) leading to the outside, the housing having a mirror (18) at its closed end, which, in operation as a laser, totally reflects the laser beam to the other end, and which is connected, by way of spacer elements (16) which ensure mechanical stability, to a semi-transparent mirror (18) fixed in the region of this second end face, each of the mirrors (18) being replaced by a closure window when the laser is operated as an amplifier, for transmitting the amplified laser beam, both the mirrors (18) and the closure windows being arranged at the height of the space between the electrodes (10, 11); the interior of the housing being subdivided into a resonator chamber (5) for accommodating the discharge and a cooler or ventilator chamber (6) by means of a partition (3) which is integral with the second electrode (11) of the electrode system (10, 11), which electrode is provided for the main discharge, the said two chambers (5, 6) being interconnected by a gas transport channel (8), characterised in that the wall is constructed as an earth rail (3) bearing against the longitudinal side walls (21, 21') of the housing, and in that the gas transport channel (8) extends along the outside of the housing.

2. Gas laser according to claim 1, characterised in that the second electrode (11) constructed as earth rail (3) extends parallel to the optical axis and has cooling channels (4) drilled or cast in a plane parallel to said axis and extending through the earth rail (3) in a straight line or a meandering line.

3. Gas laser according to claim 1 or claim 2, characterised in that the second electrode (11) of the electrode system (10, 11) is on that side of the earth rail (3) which faces the resonator chamber (5), and the first electrode (10) faces it as a counter-electrode at a distance corresponding to the height of the gas transport channel (8).

4. Gas laser according to any one of claims 1 to 3, characterised in that the housing (2) has a substantially rectangular cross-section and the opposing longitudinal side walls (21, 21') each have an opening, (7 to 7''') into which the gas transport channel opens, both in the region of the resonator chamber (5) and in the region of the cooler or ventilator chamber (6), extending in each case over the whole length of the wall.

5. Gas laser according to any one of the claims 1 to 4, characterised in that the gas transport channel (8) has a substantially C-shaped or U-shaped section and its cross-section is either uniform over its whole length or tapers towards the opening (7) (Figures 1, 3, 4).

6. Gas laser according to any one of the claims 1 to 5, characterised in that the gas transport channel (8) contains a gas purification and regeneration device (9) adapted to its cross-section, which device (9) preferably consists of a molecular filter, a gas drying vessel, an oxidation stage, a reduction stage or a combination of these individual apparatus (Figures 1, 3, 4).

7. Gas laser according to any one of the claims 1 to 6, characterised in that the spacer elements (16) connecting the two mirrors (18) comprise at least three rods having a low coefficient of thermal expansion, e.g. rods of ceramics or Invar steel, situated outside or partly outside the housing (2) and parallel to the optical axis (Figures 1, 2, 3, 4, 5).

8. Gas laser according to any one of the claims 1 to 7, characterised in that inside the housing (2), parallel to the earth rail (3) and at a distance thereto, a partition (19) is introduced, the resulting space between the partition and the earth rail accommodating the spacer elements (16') connecting the two mirrors (18) (Figure 3).

9. Gas laser according to any one of the claims 1 to 8, characterised in that the two walls of the housing facing the earth rail (3) on both sides thereof are formed as covers (12; 12') and are detachably connected to the remainder of the housing (2) by O-rings (44) and screws (45), and that the cover (12) which closes the resonator and discharge chamber (5) is provided with high voltage feed-through leads to the electrode system (10, 11) (Figures 1, 3, 4).

10. Gas laser according to any one of the claims 1 to 9, characterised in that the housing (2) is made of metal, ceramics or quartz material, and the earth rail (3) of thermally and electrically conductive material, e.g. Cu or Al.

11. Gas laser according to claim 1 or claim 8, characterised in that an electronic ignition device (27 to 28') is integrated with the housing (2) (Figures 4, 6, 7).

12. Gas laser according to claim 11, characterised in that the electronic ignition device (27 to 28') is arranged in the space in the housing between the resonator or discharge chamber (5) and cooler or ventilator chamber (6) and extends parallel thereto. (Figures 4, 6, 7).

13. Gas laser according to claims 11 and 12, characterised in that the resonator chamber (5) and the cooler or ventilator chamber (6) are constructed as attachable housing units (5'; 6') (Figure 7).

14. Gas laser according to claim 11 or claim 12, characterised in that the electronic ignition device (27 to 28') is composed of a single structural component or of one component for the preliminary discharge and another for the main discharge coupled by a timing element.

15. Gas laser according to claim 14, characterised in that each component of the ignition device (27 to 28') comprises a spark gap (27') actuated by a trigger device (28) and optionally a supply unit (28'), which spark gap (27') is connected to the electrode system (10, 11) by a capacitor (27) and optionally also by a pulse transformer (23) (Figures 6, 7).

16. Gas laser according to any one of the claims 11 to 15, characterised in that the space of the housing (2') containing the ignition device (27 to 28') is filled with an insulating liquid or gas.

17. Gas laser according to any one of the claims 1 to 16, characterised in that the totally reflective mirror (18) fixed to one end wall (29) in the space between the electrodes (10; 11) reflects the laser beam through an opposite aperture in an end wall (30) of the resonator chamber to a partially transparent and adjustable mirror (18') attached to an end wall (32) of the housing (2) (Figure 7).

18. Gas laser according to claim 17, characterised in that the totally reflective mirror (18) is sunk into the external wall (29') of the housing (2), which is parallel to the end wall (29) of the resonator chamber (5), and the end wall (29) has an opening facing the mirror (Figure 7).

19. Gas laser according to one of the preceding claims, characterised by its use as CO—, $CO_2$—, $N_2$— or Eximer-laser.

Fig. 1

Fig. 2

Fig. 3

Fig. 4

Fig. 5

Fig. 6

4

Fig. 7